# EUROPÄISCHE PATENTSCHRIFT

(11) **EP 2 159 073 B1**
(45) Veröffentlichungstag und Bekanntmachung des Hinweises auf die Patenterteilung: **07.08.2013**
(21) Anmeldenummer: 09161819.9
(22) Anmeldetag: 03.06.2009
(51) Int. Cl.: B60B 19/12, B60B 19/00

(54) **Laufradanordnung eines Fahrwerks**
Rotor assembly of an undercarriage
Agencement de roue porteuse d'un châssis

(30) Priorität: 29.08.2008 DE 102008044917
(43) Veröffentlichungstag der Anmeldung: 03.03.2010
(73) Patentinhaber: MBB Fertigungstechnik GmbH, 48361 Beelen (DE)
(72) Erfinder: Minnecker, Maic, 33375, Versmold (DE); Olgenmöller, Robert, 48336, Sassenberg (DE)
(74) Vertreter: Bittner, Thomas L.

(56) Entgegenhaltungen:
- EP-A1- 1 832 445
- WO-A2-2006/062905
- DE-A1- 3 841 971
- US-A- 4 223 753
- US-A1- 2007 096 541

## Beschreibung

Die Erfindung betrifft eine Laufradanordnung und eine Verwendung einer solchen Laufradanordnung nach den Oberbegriffen der Ansprüche 1 und 13.

Aus der gattungsgemäßen DE 38 41 971 ist ein Flurfördergerät bekannt geworden, dessen Fahrwerk von einem oder mehreren Fahrschemeln gebildet wird, die neben Lenkrollen zumindest jeweils ein als sogenanntes "Mecanum-Rad" ausgebildetes Laufrad umfassen. Charakteristisch für derartig gestaltete Laufräder ist, dass diese von einem zwei zueinander benachbarte Tragelemente umfassenden Radkörper gebildet werden, dessen Tragelemente in Lagersitzen eine Vielzahl von Rollkörpern aufnehmen. Die Drehachsen der Rollkörper sind dabei auf ein und dem selben Umfangskreis angeordnet und erstrecken sich zudem schräg zur Drehachse des Radkörpers. Zudem weisen die Rollkörper eine ballige oder tonnenförmige Außenkontur auf, die dadurch erreicht wird, dass die Außenkontur des Rollkörpers im Querschnitt eine Krümmung mit konstantem Radius beschreibt. Indem die als Mecanum-Räder ausgeführten Laufräder mit unterschiedlichen Antriebsdrehzahlen und damit mit unterschiedlichen Umfangsgeschwindigkeiten angetrieben werden, kann mittels der freidrehbaren Rollkörper eine völlig freie Bewegung des Flurfördergerätes auf einer Unterlage bewirkt werden. Wegen der zum Teil aufwendigen konstruktiven Gestaltung der Lagerungen der Rollkörper in dem Radkörper sind die Traglasten von sogenannten Mecanumrädern beschränkt.

Zur Realisierung hoher Traglasten schlägt die DE 38 41 971 vor, den Mecanumrädern innerhalb des Fahrschemels als Lenkrollen ausgeführte Stützräder zuzuordnen, sodass von dem aus Mecanumrädern und Stützrädern gebildeten Fahrwerk deutlich höhere Lasten auf dem Boden abgestützt werden können, sodass ein so ausgerüstetes Flurfördergerät eine deutlich erhöhte Förderkapazität aufweist. Damit die Stützräder der relativ freien, durch die Mecanumräder bewirkten Bewegung des Flurfördergerätes folgen können, sind die Stützräder um vertikale Achsen frei drehbar in dem jeweiligen Fahrschemel angeordnet. Aufgrund dessen, dass die Überlagerung der Schwenkbewegung der Stützräder um ihre vertikale Schwenkachse mit der Drehbewegung des jeweiligen Stützrades nicht zu derselben völlig freien Bewegung auf einer Unterlage führt, kommt es bei derartigen Fahrwerksausführungen zu einem starken scharren der Stützräder auf der Unterlage. Neben einem erhöhten Verschleiß der Stützräder hat dies auch zur Folge, dass der mit dem Scharren verbundene Bremseffekt auch die präzise Bewegung des Flurfördergerätes auf dem Boden behindert.

Aus der EP 1 832 445 ist zudem eine Laufradanordnung bekannt geworden, die paarweise positionierte Laufräder zur Abstützung hoher Last auf einem Transportfahrzeug umfasst. Aufgrund dessen, dass die Laufrollen benachbarter Räder in einem 45°-Winkel zueinander stehen und nicht angetrieben sind haben derartige Radkonzepte vor allem den Nachteil, dass sie nur eine eingeschränkte Bewegungsfreiheit eines mit derartig Rädern ausgestatteten Fahrzeugs ermöglichen.

Es ist deshalb Aufgabe der Erfindung die beschriebenen Nachteile des Standes der Technik zu vermeiden und insbesondere eine Laufradanordnung vorzuschlagen, die das Transportieren hoher Lasten zulässt, ohne die Laufeigenschaften zu verschlechtern und den damit verbundenen Verschleiß zu erhöhen.

Diese Aufgabe wird erfindungsgemäß durch die kennzeichnenden Merkmale der Ansprüche 1 und 13 gelöst.

Indem die Laufradanordnung eines Fahrwerks eine Vielzahl von Laufrädern umfasst und diese jeweils einen von zueinander benachbarten Tragelementen gebildeten Radkörper umfassen, wobei die Tragelemente zwischen sich und auf einem Umfangskreis liegend eine Vielzahl von Rollkörpern drehbar aufnehmen und die Rollkörper zumindest teilweise über den Umfang der Tragelemente hinausragen und deren Drehachsen schräg zur Drehachse des Radkörpers ausgerichtet sind und wenigstens ein Teil der Laufräder zumindest paarweise angeordnet sind, wird sichergestellt, dass von dem Fahrzeug hohe Lasten transportiert werden können, ohne dass die Laufeigenschaften verschlechtert und der damit verbundene Verschleiß erhöht wird.

In einer vorteilhaften Ausgestaltung der Erfindung sind die zumindest paarweise angeordneten Laufräder als Doppel- oder Mehrfachrad ausgeführt, wobei jeweils eines der Laufräder angetrieben wird und das zumindest eine weitere Laufrad freidrehend ausgebildet ist. Auf diese Weise wird eine kostengünstige Antriebsstrangstruktur geschaffen, da der Antriebsstrang nur bis zu einem der Laufräder geführt werden muss. Dieser Effekt lässt sich auch dadurch noch erhöhen, wenn nur das jeweils innen liegende Laufrad angetrieben wird, da in diesem Fall die Antriebsenergie von dem Fahrzeugchassis auf das jeweilige Fahrwerk auf dem kürzest möglichen Weg übertragen wird.

Indem in einer weiteren vorteilhaften Ausgestaltung der Erfindung die Radkörper der zumindest paarweise angeordneten Laufräder relativ zueinander drehbar auf der die zumindest paarweise angeordneten Laufräder tragenden Fahrzeugachse angeordnet sind, wird sicherstellt, dass voneinander abweichende Schlupfbedingungen zwischen den Laufrädern eines Doppel- oder Mehrfachrades nicht zu Zwangskräften im Antriebsstrang führen, da die Laufräder eine entkoppelte, voneinander unabhängige Bewegung ausführen.

Eine weitere Erhöhung der von dem Fahrzeug transportierbaren Last, eine sichere Übertragung der Stützlasten auf den Boden sowie eine Höhenführung des Transportfahrzeugs wird dann erreicht, wenn in einer vorteilhaften Ausgestaltung der Erfindung jeweils erste und zweite Laufradsätze von zumindest paarweise angeordneten Laufrädern mittels Tandemanordnung an der Tragrahmenstruktur des Fahrzeugs angebunden sind.

In einer vorteilhaften Weiterbildung der Erfindung ist die Tandemanordnung in der Weise ausgeführt, dass jeder der Laufradsätze in einem diesen zugeordneten obenseitigen und untenseitigen Bereich um in Achsrichtung der Laufradachsen orientierte Schwenkachsen schwenkbeweglich an einer Fahrwerkrahmenstruktur angeordnet ist. Auf diese Weise wird es möglich, dass jeder Laufradsatz der Tandemanordnung eine Schwenkbewegung ausführen kann, die schließlich ein Anheben oder Absenken des Fahrzeugs ermöglicht. Auf diese Weise kann das Fahrzeug bei Belade- und Montagevorgängen abgesenkt werden, während es beim Transport zur Realisierung einer ausreichenden Bodenfreiheit angehoben werden kann.

Zur Reduzierung der von dem Fahrwerk auf die Arbeitsplattform übertragenen bodenunebenheits- und fahrgeschwindigkeitsbedingten Stoßbelastungen, ist in einer weiteren vorteilhaften Ausgestaltung der Erfindung vorgesehen, dass jeder der Radsätze der Tandemanordnung über ein Dämpfungselement mit der Fahrwerkrahmenstruktur gekoppelt ist.

Um eine möglichst große Bodenfreiheit bei Transportprozessen einerseits und eine möglichst bodennahe Position bei Montageprozessen sicherstellen zu können, ist in einer weiteren vorteilhaften Ausgestaltung der Erfindung vorgesehen, dass zumindest einer der Radsätze der Tandemanordnung über ein längenveränderliches Element mit der Fahrwerkrahmenstruktur gekoppelt ist, welches durch Verlängerung oder Verkürzung ein Anheben oder Absenken des Fahrzeugchassis bewirkt.

Ein bauraumsparendes, präzise ansteuerbares längenveränderliches Element ergibt sich dann, wenn das längenveränderliche Element als elektrisch betriebene Hubspindel ausgeführt ist und die Hubspindel drehfest mit der Fahrwerktragrahmenstruktur und schwenkbeweglich mit zumindest einem Laufradsatz verbunden ist.

Um auch eine gute Bodenanpassung quer zur Bewegungsrichtung des Fahrzeugs sicherzustellen, ist in einer weiteren vorteilhaften Ausgestaltung der Erfindung vorgesehen, dass jeder der Laufradsätze einer Tandemanordnung um eine in Fahrrichtung weisende Achse schwenkbeweglich an der Fahrwerktragrahmenstruktur angeordnet ist.

Eine kompakte, eine optimierte Montagefreundlichkeit aufweisende Ausgestaltung der Erfindung ergibt sich dann, wenn die zumindest paarweise angeordneten Laufräder von einem gemeinsamen Radkasten aufgenommen werden und wobei der Radkasten und die ihm zugeordneten Laufräder ein Laufradmodul bilden. Die Montage- und Demontagefreundlichkeit wird auch dadurch noch erhöht, dass dem Radkasten die Lagerstellen für die Koppelung der zumindest paarweise angeordneten Laufräder mit der Fahrwerktragrahmenstruktur zugeordnet sind.

Indem die erfindungsgemäße Laufradanordnung in einem Fahrwerk für fahrbare Arbeitsplattformen verwendet wird und wobei der Arbeitsplattform eine Vielzahl der zumindest paarweise angeordneten Laufräder als Laufradsatz oder Tandemanordnung zugeordnet sind, wird sichergestellt, dass die so ausgerüstete Arbeitsplattform das Transportieren hoher Lasten zulässt, ohne die Laufeigenschaften zu verschlechtern und den damit verbundenen Verschleiß zu erhöhen.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: ein als Arbeitsplattform ausgeführtes Fahrzeug mit erfindungsgemäßen Fahrwerken
- Figur 2: ein erfindungsgemäßes Fahrwerk in Tandemanordnung
- Figur 3: Detail des Fahrwerks nach Figur 2
- Figur 4: Detail des Fahrwerks nach Figur 3

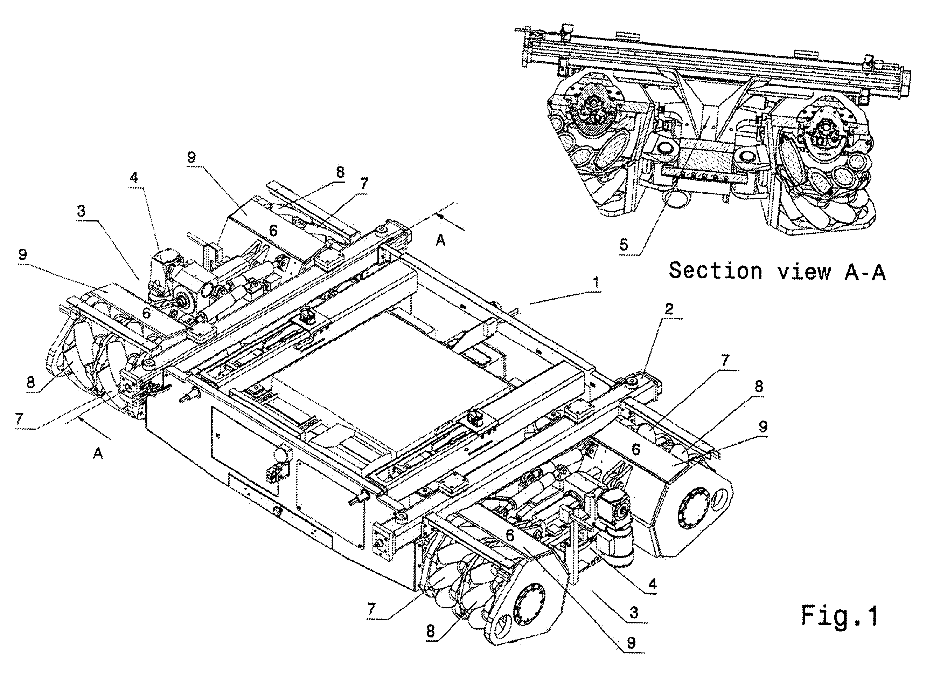

Figur 1 zeigt eine schematisch dargestellte Arbeitsplattform 1 deren Tragrahmenstruktur 2 beidseitig jeweils eine der erfindungsgemäßen und noch näher zu beschreibenden Laufradanordnungen 3 zugeordnet ist. Es liegt im Rahmen der Erfindung, dass die an sich bekannte Arbeitsplattform 1 eine Vielzahl der erfindungsgemäßen Laufradanordnungen 3 aufweisen kann. Jede der Laufradanordnungen 3 umfasst eine Fahrwerkrahmenstruktur 4, die über eine Flanschverbindung 5 an der Tragrahmenstruktur 2 der Arbeitsplattform 1 angeflanscht ist. Jeder Fahrwerkrahmenstruktur 4 ist front- und heckseitig jeweils ein Laufradsatz 6 zugeordnet. Jeder der Laufradsätze 6 umfasst paarweise angeordnete erste und zweite Laufräder 7, 8, die in noch näher zu beschreibender Weise von einem Radkasten 9 aufgenommen werden.

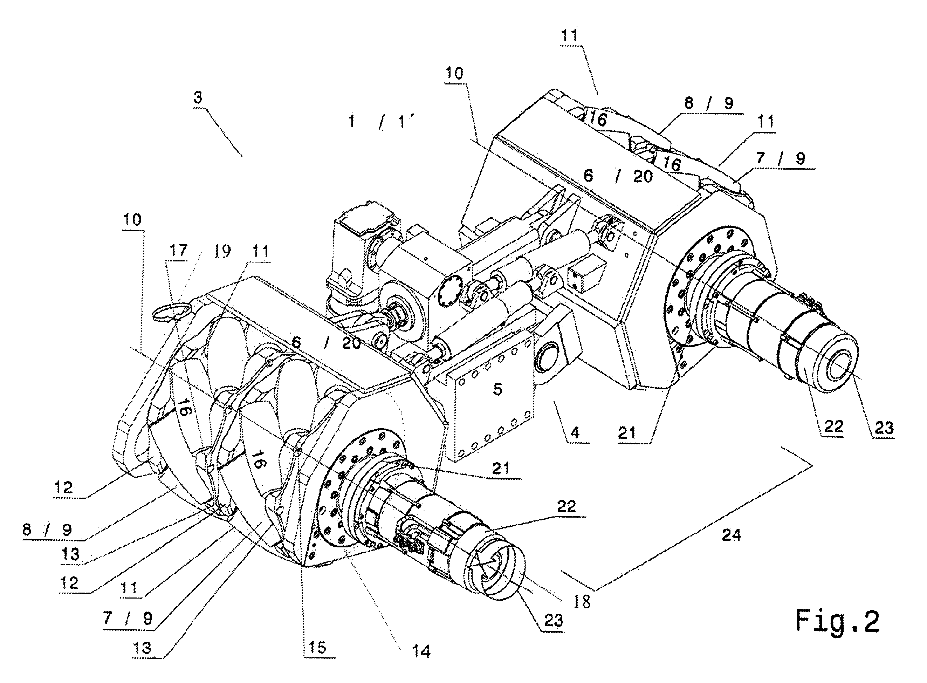

Figur 2 zeigt die erfindungsgemäße Laufradanordnung 3 im Detail. Die von jedem Laufradsatz 6 aufgenommenen, paarweise angeordneten Laufräder 7, 8 sind als sogenannte Mecanumräder 9 ausgeführt. Jedes Laufrad 7, 8 umfasst neben der nur strich-punktiert dargestellten Laufradachse 10 beidseitig die Laufradbreite begrenzende zueinander benachbart angeordnete einen Radkörper 11 bildende Tragelemente 12, 13 welche drehfest oder drehbar mit der Laufradachse 10 verbunden sind. Die Tragelemente 12, 13 werden in regelmäßigen Abständen von auf einem gemeinsamen Umfangskreis 14 liegenden Öffnungen 15 durchsetzt, wobei die Öffnungen 15 von den nicht näher dargestellten Lagerungen der die Lauffläche des Mecanumrades 9 bildenden Rollkörper 16 durchsetzt werden. Die Rollkörper 16 sind jeweils freidrehbar in den Tragelementen 12, 13 gelagert, wobei die Drehachse 17 jedes Rollkörpers 16 winklig zur Laufradachse 10 des jeweiligen Laufrades 7, 8 angeordnet ist und diese Schrägstellung der Rollkörper 16 durch den sich ergebenden Winkel α zwischen besagter Laufradachse 10 und der jeweiligen Drehachse 17 ergibt. Indem jedes Laufrad 7, 8 einerseits um seine eigene Laufradachse 10 gemäß den Pfeilrichtungen 18 in und entgegen dem Uhrzeigersinn umlaufen kann und andererseits jeder Rollkörper 16 um seine Drehachse 17 gemäß Pfeilrichtung 19 ebenfalls in oder entgegen dem Uhrzeigersinn umläuft, wird ein mit derartigen Laufrädern 7, 8 versehenes, im dargestellten Ausführungsbeispiel nach Figur 1 als Arbeitsplattform 1 ausgeführtes Fahrzeug 1', in die Lage versetzt, sehr präzise Bewegungen in unterschiedlichste Bewegungsrichtungen zu vollführen.

Die im dargestellten Ausführungsbeispiel als zwei Laufräder 7, 8 umfassendes Doppelrad 20 ausgeführten Laufradsätze 6 könnten auch so gestaltet sein, dass jeder Laufradsatz 6 eine Vielzahl von Laufrädern 7, 8 aufnimmt, wobei sich die Anzahl der Laufräder 7, 8 vor allem nach den auf dem Boden abzustützenden Lasten richten würde. In an sich bekannter und deshalb nicht näher dargestellter Weise verfügt jede Arbeitsplattform 1 über einen Laufradantrieb und zugehörige Steuerung, wobei die Laufradachse 10 der Laufradsätze 6 arbeitsplattformseitig über jeweils eine Flanschverbindung 21 mit einer Antriebseinheit 22 des nur symbolisch angedeuteten Laufradantriebs 23 der Arbeitsplattform 1 verbunden sind. Indem das der jeweiligen Antriebseinheit 22 nächstliegende Laufrad 7 drehfest mit der Laufradachse 10 verbunden ist und das der Antriebseinheit 22 abgewandte Laufrad 8 frei drehbar, aber axial gesichert auf der Laufradachse 10 angeordnet ist, wird die Antriebsenergie auf kurzem Weg dem treibenden Laufrad 7 des jeweiligen Laufradsatzes 6 zugeführt. Aufgrund dessen, dass das weitere Laufrad 8 nicht aktiv angetrieben wird und sich außerdem relativ zu dem angetriebenen Laufrad 7 auf der Laufradachse 10 drehen kann, reduzieren sich die Kosten für die Antriebsstrangarchitektur und voneinander abweichende Schlupfverhältnisse beider Laufräder 7, 8 führen nicht zu Zwangskräften im Laufradantriebsstrang 23.

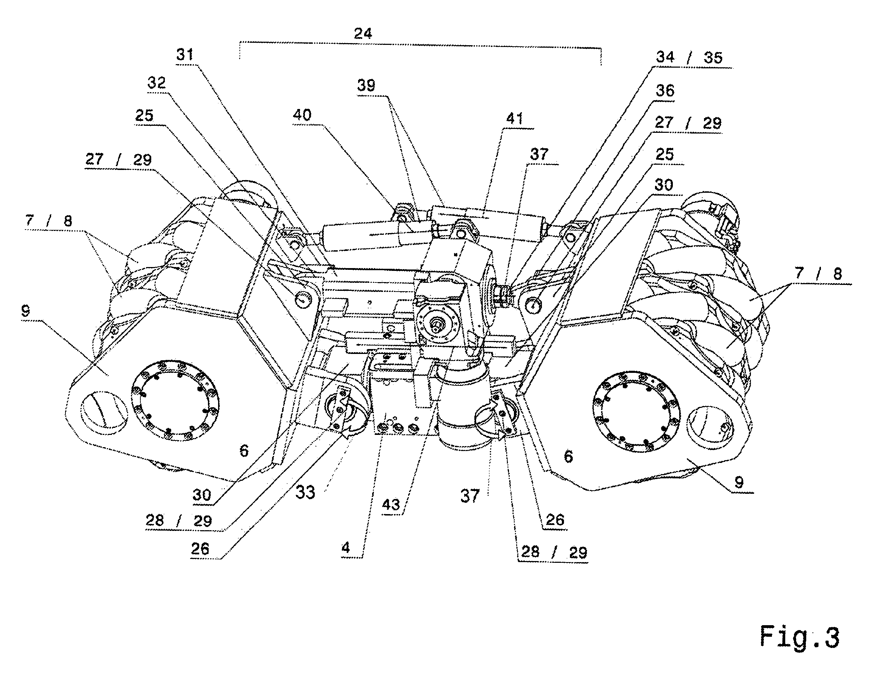

Damit das als Arbeitsplattform 1 ausgeführte Fahrzeug 1' in unterschiedlichen Arbeits- und Transporthöhen betrieben werden kann, sind die Fahrwerkrahmenstruktur 4 und die ihr zugeordneten Laufradsätze 6 als Tandemanordnung 24 ausgeführt. Gemäß den in Fig. 3 dargestellten Details der Tandemanordnung nach Fig. 2 sind den dem jeweiligen Laufradsatz 7, 8 zugeordneten Radkästen 9 in ihrem obenseitigen rückwärtigen Bereich erste Flanschlagersitze 25 und in einem untenseitigen rückwärtigen Bereich zweite Flanschlagersitze 26 angeformt, die von als axial gesicherte Bolzen 27, 28 ausgeführten horizontalen Schwenkachsen 29 durchsetzt werden. Über diese Flanschlagersitze 25, 26 ist der jeweilige Radkasten 9 an der Fahrwerkrahmenstruktur 4 um die jeweilige horizontale Schwenkachse 29 schwenkbar angelenkt. Die untenseitigen Flanschlagersitze 26 werden in noch näher zu beschreibender Weise von Drehlagersitzen 30 durchsetzt, die anderenends von der Fahrwerkrahmenstruktur 4 aufgenommen werden. In ihrem obenseitigen und in Figur 3 linksseitigen Bereich nimmt die Tragrahmenstruktur 4 einen Tragarm 31 drehfest auf, dessen endseitiger Lagerflansch 32 den ihm zugeordneten obenseitigen Flanschlagersitz 25 des jeweiligen Radkastens 9 durchsetzt und zugleich den jeweiligen Bolzen 27 umgreift. Auf diese Weise kann der von dem Tragarm 31 gehaltene Laufradsatz 6 gemäß Pfeilrichtung 33 um die horizontale Schwenkachse 29 schwenken.

Der weitere Laufradsatz 6 der erfindungsgemäßen Tandemanordnung 24 ist in seinem obenseitigen Bereich über ein längenveränderliches Element 34 an der Fahrwerkrahmenstruktur 4 angeordnet. Das längenveränderliche Element 34 ist im dargestellten Ausführungsbeispiel als elektrisch betriebene Hubspindel 35 ausgeführt, die einenends drehfest mit der Fahrwerkrahmenstruktur 4 verbunden ist und deren radkastenseitiges Ende als Lagerflansch 36 ausgebildet ist, welcher den obenseitigen Flanschlagersitz 25 des jeweiligen Radkastens 9 durchsetzt und zugleich selbst von dem die Schwenkachse 29 bildenden Bolzen 27 durchsetzt wird. Indem nun die Hubspindel 35 gemäß Pfeilrichtung 37 in die in Figur 3 dargestellte ausgefahrene Position bewegt wird, schwenken beide Laufradsätze 6 gemäß den Pfeilrichtungen 33, 37 um ihre jeweilige Schwenkachse 29. Dabei bewegen sich die beiden Laufradsätze 6 der jeweiligen Tandemanordnung 24 voneinander weg, was dazu führt, dass die Arbeitsplattform 1 angehoben wird. In analoger Weise wird die Arbeitsplattform 1 abgesenkt, wenn die Hubspindel 35 einfährt. In diesem Fall schwenken die Laufradsätze 6 gemäß den Pfeilrichtungen 33, 37 um die der Fahrwerkrahmenstruktur 4 untenseitig zugeordneten Schwenkachsen 29 aufeinander zu.

Zur Dämpfung von Stoßbelastungen, die von den auf dem Boden 38 geführten Laufrädern 7, 8 über die Fahrwerkrahmenstruktur 4 auf die Arbeitsplattform 1 übertragbaren Stöße sind zwischen dem jeweiligen Radkasten 9 und der Fahrwerkrahmenstruktur 4 Dämpfungselemente 39 schwenkbeweglich zwischengeschaltet, die gemäß den Pfeilrichtungen 40, 41 eine Kompensation, zumindest eine Reduzierung von Stoßbelastungen bewirken.

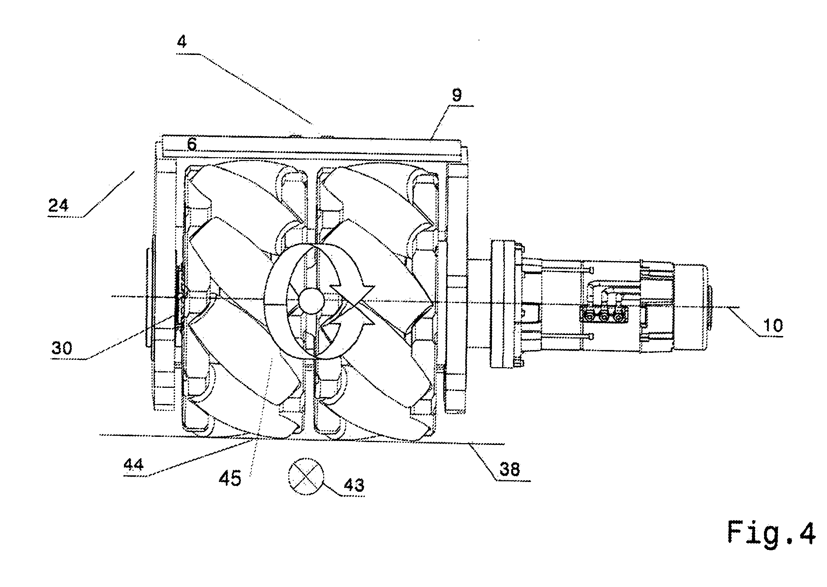

Damit jeder Laufradsatz 6 auch eine Queranpassung an Unebenheiten des Bodens 38 zulässt, werden die die Laufradsätze 6 aufnehmenden Radkästen 9, gemäß den Figuren 3 und 4, untenseitig von Drehlagersitzen 30 der Fahrwerkrahmenstruktur 4 aufgenommen, die gemäß Pfeilrichtung 42 eine Drehung jedes Laufradsatzes 6 um eine in Längsrichtung 43 jeder Tandemanordnung 24 weisende Schwenkachse 45 in Abhängigkeit von den verschiedenen Lagerspielen in einem kleinen Bereich zulässt, wobei sich ein Bereich von +- 2° als ausreichend erwiesen hat.

Zur Optimierung der Montagefreundlichkeit sind der jeweilige Radkasten 9, der ihm zugeordnete Laufradsatz 6 und die zugehörige Laufradachse 10 als Laufradmodul 44 ausgebildet. Es liegt im Rahmen der Erfindung einem beispielsweise als Arbeitsplattform 1 ausgeführten Fahrzeug 1' eine Vielzahl der zumindest paarweise angeordneten Laufräder 7,8 als Laufradsatz 6 oder in Tandemanordnung 24 oder in Kombination mit Einzelradanordnungen zuzuordnen.

### Bezugszeichenliste:

| | | | |
|---|---|---|---|
| 1 | Arbeitsplattform | 30 | Drehlagersitz |
| 1' | Fahrzeug | 31 | Tragarm |
| 2 | Tragrahmenstruktur | 32 | Lagerflansch |
| 3 | Laufradanordnung | 33 | Pfeilrichtung |
| 4 | Fahrwerkrahmenstruktur | 34 | längenveränderliches Element |
| 5 | Flanschverbindung | 35 | Hubspindel |
| 6 | Laufradsatz | 36 | Lagerflansch |
| 7 | Laufrad | 37 | Pfeilrichtung |
| 8 | Laufrad | 38 | Boden |
| 9 | Radkasten | 39 | Dämpfungselement |
| 10 | Laufradachse | 40 | Pfeilrichtung |
| 11 | Radkörper | 41 | Pfeilrichtung |
| 12 | Tragelement | 42 | Pfeilrichtung |
| 13 | Tragelement | 43 | Längsrichtung |
| 14 | Umfangskreis | 44 | Laufradmodul |
| 15 | Öffnungen | | |
| 16 | Rollkörper | | |
| 17 | Drehachse | | |
| 18 | Pfeilrichtung | | |
| 19 | Pfeilrichtung | | |
| 20 | Doppelrad | | |
| 21 | Flanschverbindung | | |
| 22 | Antriebseinheit | | |
| 23 | Laufradantrieb | | |
| 24 | Tandemanordnung | | |
| 25 | Flanschlagersitz | | |
| 26 | Flanschlagersitz | | |
| 27 | Bolzen | | |
| 28 | Bolzen | | |
| 29 | Schwenkachse | | |

## Patentansprüche

1. Laufradanordnung (3) eines Fahrwerks, wobei das Fahrwerk eine Vielzahl von Laufrädern (7,8) umfasst und diese jeweils einen von zueinander benachbarten Tragelementen (12,13) gebildeten Radkörper (11) umfassen, wobei die Tragelemente (12,13) zwischen sich und auf einem Umfangskreis liegend eine Vielzahl von Rollkörpern (11) drehbar aufnehmen und die Rollkörper (11) zumindest teilweise über den Umfang der Tragelemente (12,13) hinausragen und deren Drehachsen (17) schräg zur Drehachse (16) des Radkörpers (11) ausgerichtet sind,
**dadurch gekennzeichnet,**
**dass** ein Teil der Laufräder (7,8) zumindest paarweise angeordnet sind,
die zumindest paarweise angeordneten Laufräder(7,8) als Doppel- oder Mehrfachrad ausgeführt sind und wobei jeweils eines der Laufräder (7, 8) angetrieben wird und das zumindest eine weitere Laufrad (7,8) freidrehend ausgebildet ist.

2. Laufradanordnung eines Fahrwerks nach Anspruch 1,
**dadurch gekennzeichnet,**
**dass** das jeweils innen liegende Laufrad (7) angetrieben wird.

3. Laufradanordnung eines Fahrwerks nach einem der vorhergehenden Ansprüche,
**dadurch gekennzeichnet,**
**dass** die Radkörper (11) der paarweise angeordneten Laufräder(7,8) relativ zueinander drehbar auf der die paarweise angeordneten Laufräder (7,8) tragenden Fahrzeugachse (10) angeordnet sind.

4. Laufradanordnung eines Fahrwerks nach einem der vorhergehenden Ansprüche,
**dadurch gekennzeichnet,**
**dass** jeweils erste und zweite Laufradsätze (6) von zumindest paarweise angeordneten Laufrädern/7,8) mittels Tandemanordnung (24)an der Tragrahmenstruktur (2) des Fahrzeugs (1,1') angeordnet sind.

5. Laufradanordnung eines Fahrwerks nach Anspruch 4,
**dadurch gekennzeichnet,**
**dass** die Tandemanordnung (24) in der Weise ausgeführt ist, dass jeder der Laufradsätze (6) in einem diesen zugeordneten obenseitigen und untenseitigen Bereich um in Achsrichtung der Kaufradachsen (10) orientierte Schwenkachsen (28,29) schwenkbeweglich an einer Fahrwerkrahmenstruktur (4) angeordnet sind.

6. Laufradanordnung eines Fahrwerks nach einem der Ansprüche 4-5,
**dadurch gekennzeichnet,**
**dass** jeder der Radsätze (6) der Tandemanordnung (24) über ein Dämpfungselement (39) mit der Fahrwerkrahmenstruktur (4) gekoppelt ist.

7. Laufradanordnung eines Fahrwerks nach einem der Ansprüche 4-6,
**dadurch gekennzeichnet,**
**dass** zumindest einer der Radsätze (6) der Tandemanordnung (24) über ein längenveränderliches Element )34) mit Fahrwerkrahmenstruktur (4) gekoppelt ist.

8. Laufradanordnung eines Fahrwerks nach Anspruch 7,
**dadurch gekennzeichnet,**
**dass** das längenveränderliche Element (34) als elektrisch betriebene Hubspindel (35) ausgeführt ist und die Hubspindel (35) drehfest mit der Fahrwerkrahmenstruktur (4) und schwenkbeweglich mit dem zumindest einem Laufradsatz (6) verbunden ist.

9. Laufradanordnung eines Fahrwerks nach einem der Ansprüche 4-8,
**dadurch gekennzeichnet,**
**dass** jeder der Laufradsätze (6) einer Tandemanordnung (24) um eine in Fahrrichtung weisende Achse (45) schwenkbeweglich an der Fahrwerkrahmenstruktur (4) angeordnet ist.

10. Laufradanordnung eines Fahrwerks nach einem der vorhergehenden Ansprüche,
**dadurch gekennzeichnet,**
**dass** die zumindest paarweise angeordneten Laufräder(7,8) von einem gemeinsamen Radkasten (9) aufgenommen werden und wobei der Radkasten (9) und zumindest die ihm zugeordneten Laufräder (7,8) einen Laufradmodul (44) bilden.

11. Laufradanordnung eines Fahrwerks nach Anspruch 10,
**dadurch gekennzeichnet,**
**dass** dem Radkasten (9) die Lagerstellen (25,26) für die Koppelung der zumindest paarweise angeordneten Laufräder (7,8) mit der Fahrwerkrahmenstruktur zugeordnet sind.

12. Verwendung der Laufradanordnung nach Anspruch 1 in einem Fahrwerk für fahrbare Arbeitsplattformen (1), wobei der Arbeitsplattform (1) eine Vielzahl der zumindest paarweise angeordneten Laufräder (7,8) als Laufradsatz (6) oder Tandemanordnung (24) zugeordnet sind.

## Claims

1. A wheel arrangement (3) of a chassis, wherein the chassis includes a plurality of wheels (7, 8) and they each include a respective wheel body (11) formed by mutually adjacent carrier elements (12, 13), wherein the carrier elements (12, 13) rotatably accommodate between themselves and disposed on a peripheral circle a plurality of rolling bodies (11) and the rolling bodies (11) project at least partially beyond the periphery of the carrier elements (12, 13) and the axes of rotation (17) thereof are oriented inclinedly relative to the axis of rotation (16) of the wheel body (11),
**characterised in that**
some of the wheels (7, 8) are arranged at least in paired relationship,
the wheels (7, 8) arranged at least in paired relationship are in the form of a double or multiple wheel, and wherein a respective one of the wheels (7, 8) is driven and the at least one further wheel (7, 8) is adapted to rotate freely.

2. A wheel arrangement of a chassis according to claim 1 **characterised in that** the respective inwardly disposed wheel (7) is driven.

3. A wheel arrangement of a chassis according to one of the preceding claims **characterised in that** the wheel bodies (11) of the wheels (7, 8) arranged in paired relationship are arranged rotatably relative to each other on the vehicle axle (10) carrying the wheels (7, 8) arranged in paired relationship.

4. A wheel arrangement of a chassis according to one of the preceding claims **characterised in that** respective first and second wheel sets (6) of wheels (7, 8) arranged at least in paired relationship are arranged by means of a tandem arrangement (24) on the carrier frame structure (2) of the vehicle (1, 1').

5. A wheel arrangement of a chassis according to claim 4 **characterised in that** the tandem arrangement (24) is of such a structure that each of the wheel sets (6) in a top-side and underneath-side region associated therewith are arranged pivotably on a chassis frame structure (4) about pivot axes (28, 29) oriented in the direction of the axis of the wheel axles (10).

6. A wheel arrangement of a chassis according to one of claims 4 and 5 **characterised in that** each of the wheel sets (6) of the tandem arrangement (24 is coupled to the chassis frame structure (4) by way of a damping element (39).

7. A wheel arrangement of a chassis according to one of claims 4 and 5 **characterised in that** at least one of the wheel sets (6) of the tandem arrangement (24) is coupled to the chassis frame structure (4) by way of a variable-length element (34).

8. A wheel arrangement of a chassis according to claim 7 **characterised in that** the variable-length element (34) is in the form of an electrically operated stroke spindle (35) and the stroke spindle (35) is connected non-rotatably to the chassis frame structure (4) and pivotably to the at least one wheel set (6).

9. A wheel arrangement of a chassis according to one of claims 4 to 8 **characterised in that** each of the wheel sets (6) of a tandem arrangement (24) is arranged on the chassis frame structure (4) pivotably about an axis (45) facing in the direction of travel.

10. A wheel arrangement of a chassis according to one of the preceding claims **characterised in that** the wheels (7, 8) arranged at least in paired relationship are accommodated by a common wheel box (9) and wherein the wheel box (9) and at least the wheels (7, 8) associated therewith form a wheel module (44).

11. A wheel arrangement of a chassis according to claim 10 **characterised in that** associated with the wheel box (9) are the mounting locations (25, 26) for coupling the wheels (7, 8) which are arranged at least in paired relationship to the chassis frame structure.

12. Use of the wheel arrangement according to claim 1 in a chassis for movable working platforms (1), wherein associated with the working platform (1) is a plurality of the wheels (7, 8) arranged at least in paired relationship as a wheel set (6) or a tandem arrangement (24).

## Revendications

1. Agencement de roues porteuses (3) d'un châssis, le châssis comprenant une pluralité de roues porteuses (7, 8) et celles-ci comprenant chacune un corps de roue (11) formé d'éléments porteurs (12, 13) adjacents les uns aux autres, les éléments porteurs (12, 13) recevant de manière rotative une pluralité de corps roulants (11) situés entre eux et sur un cercle périphérique, et les corps roulants (11) dépassant au moins partiellement de la périphérie des éléments porteurs (12, 13), et leurs axes de rotation (17) étant orientés obliquement par rapport à l'axe de rotation (16) du corps de roue (11),**caractérisé en ce qu'**une partie des roues porteuses (7, 8) sont disposées au moins par paires, **en ce que** les roues porteuses (7, 8) disposées au moins par paires sont réalisées sous la forme de roues doubles ou multiples, à chaque fois une des roues porteuses (7, 8) étant entraînée et l'autre roue porteuse (7, 8), au nombre d'au moins une, tournant librement.

2. Agencement de roues porteuses d'un châssis selon la revendication 1, **caractérisé en ce que**, dans chaque cas, la roue porteuse (7) située à l'intérieur est entraînée.

3. Agencement de roues porteuses d'un châssis selon une des revendications précédentes, **caractérisé en ce que** les corps de roue (11) des roues porteuses (7, 8) disposées par paires sont disposés de manière rotative les uns par rapport aux autres sur l'essieu de véhicule porteur (10) qui porte les roues porteuses (7, 8) disposées par paires.

4. Agencement de roues porteuses d'un châssis selon une des revendications précédentes, **caractérisé en ce que** des premiers et deuxièmes jeux de roues porteuses (6) formés de roues porteuses (7, 8) disposées au moins par paires sont chaque fois disposés sur la structure de bâti (2) du véhicule (1, 1') au moyen d'une disposition en tandem (24).

5. Agencement de roues porteuses d'un châssis selon la revendication 4, **caractérisé en ce que** la disposition en tandem (24) est réalisée de façon que chacun des jeux de roues porteuses (6) soit disposé, dans une zone supérieure et inférieure qui lui est associée, de manière pivotante autour d'axes de pivotement (28, 29) orientés dans la direction des axes de roue porteuse (10) sur une structure de cadre de châssis (4).

6. Agencement de roues porteuses d'un châssis selon une des revendications 4 à 5, **caractérisé en ce que** chacun des jeux de roues (6) de la disposition en tandem (24) est couplé à la structure de cadre de châssis (4) par un élément d'amortissement (39).

7. Agencement de roues porteuses d'un châssis selon une des revendications 4 à 6, **caractérisé en ce qu'**au moins un des jeux de roues (6) de la disposition en tandem (24) est accouplé à la structure de cadre de châssis (4) par un élément (34) de longueur variable.

8. Agencement de roues porteuses d'un châssis selon la revendication 7, **caractérisé en ce que** l'élément (34) de longueur variable est réalisé sous la forme d'une broche de levage (35) à fonctionnement électrique, laquelle broche de levage (35) est reliée de manière solidaire en rotation à la structure de cadre de châssis (4) et de manière pivotante audit au moins un jeu de roues porteuses (6).

9. Agencement de roues porteuses d'un châssis selon une des revendications 4 à 8, **caractérisé en ce que** chacun des jeux de roues porteuses (6) d'une disposition en tandem (24) est disposé de manière pivotante autour d'un axe (45) orienté dans la direction de marche sur la structure de cadre de châssis (4).

10. Agencement de roues porteuses d'un châssis selon une des revendications précédentes, **caractérisé en ce que** les roues porteuses (7, 8) disposées au moins par paires sont reçues par un passage de roue (9) commun, le passage de roue (9) et au moins les roues porteuses (7, 8) qui lui sont associées formant un module de roues porteuses (44).

11. Agencement de roues porteuses d'un châssis selon la revendication 10, **caractérisé en ce que** les points d'appui (25, 26) pour l'accouplement des roues porteuses (7, 8), disposées au moins par paires, à la structure de cadre de châssis sont associés au passage de roue (9).

12. Utilisation de l'agencement de roues porteuses selon la revendication 1 dans un châssis pour plateformes de travail mobiles (1), une pluralité de roues porteuses (7, 8) disposées au moins par paires étant associée à la plateforme de travail (1) sous la forme d'un jeu de roues porteuses (6) ou d'une disposition en tandem (24).
